# EUROPEAN PATENT SPECIFICATION

(11) **EP 3 851 591 B1**
(45) Date of publication and mention of the grant of the patent: **15.10.2025**
(21) Application number: 20208347.3
(22) Date of filing: 18.11.2020
(51) Int. Cl.: E02F 3/96, B60K 17/28, E02F 9/20, E02F 9/26, G06F 8/65

(54) **PROGRAM UPDATE SYSTEM FOR WORKING MACHINE**
PROGRAMMAKTUALISIERUNGSSYSTEM FÜR EINE ARBEITSMASCHINE
SYSTÈME DE MISE À JOUR DE PROGRAMME POUR MACHINE DE TRAVAIL

(30) Priority: 28.12.2019 JP 2019239971; 28.12.2019 JP 2019239972
(43) Date of publication of application: 21.07.2021
(73) Proprietor: KUBOTA CORPORATION, Osaka-shi, Osaka 556-8601 (JP)
(72) Inventor: MIURA, Keisuke, Sakai-ku, Sakai-shi, Osaka 5900823 (JP); IKEDA, Ryo, Sakai-ku, Sakai-shi, Osaka 5900823 (JP); HAYASHI, Shinji, Sakai-ku, Sakai-shi, Osaka 5900823 (JP); KINUGAWA, Ryosuke, Sakai-ku, Sakai-shi, Osaka 5900823 (JP); FUJIMOTO, Koichi, Sakai-ku, Sakai-shi, Osaka 5900823 (JP)
(74) Representative: Müller-Boré & Partner Patentanwälte PartG mbB

(56) References cited:
- EP-A1- 2 602 157
- WO-A1-2018/179778
- JP-A- 2010 176 372
- US-A1- 2015 097 674
- US-A1- 2016 371 076
- US-A1- 2018 246 712
- US-A1- 2019 205 115

## Description

### [TECHNICAL FIELD]

The present invention relates to a program update system for the working machine such as an agriculture machine and a construction machine.

### [BACKGROUND ART]

Patent Document 1 is known as a system for writing an update program of a working machine.

In a program updating method for a controller device of a working machine configured to write the update program to the controller device of the working machine connected to a vehicle communication network of Patent Document 1, the program updating method includes steps of preliminarily setting data for checking a computer program of the controller device for the working machine, erasing data to be used to check an existing computer program preliminarily stored in the controller device before the update program is written to the controller device for the working machine, and then writing the update program to the controller device for the working machine and writing data to be used to check the update program lastly to the controller device for the working machine.

US2018/246712 A1 discloses a program rewriting device for a construction machine, which rewrites a program of an on-board controller, provided with a mode determination section that determines whether the operation mode of the construction machine is a maintenance mode in which the program can be rewritten and the operation of an actuator is prevented, a preparation mode in which the rewriting of the program and the operation of the actuator are prevented, or a work mode in which the rewriting of the program is prevented and the operation of the actuator is permitted, an urgency degree determination section determines the degree of urgency for rewriting of an update program, a rewriting execution section that, at the time of rewriting the program, when it has been determined that the operation mode is the preparation mode and the degree of urgency is high, rewrites the program by switching the operation mode to the maintenance mode. [RELATED ART DOCUMENTS]

### [PATENT DOCUMENTS]

[Patent Document 1] Japanese Unexamined Patent Publication No. 2010-176372

### [DISCLOSURE OF THE INVENTION]

### [PROBLEMS TO BE SOLVED BY THE INVENTION]

Patent Document 1 is very useful because it allows an update program to be properly written to a controller device installed in a working machine. However, Patent Document 1 does not consider updating the update program of the working machine, that is, another working device connected to the vehicle body.

In view of the above-mentioned problems, the present invention intends to provide a communication system for a working machine capable of easily updating an update program of a working device connected to the machine body. The present invention is defined by the independent claim. Preferred examples are defined in the dependent claims.

### [BRIEF DESCRIPTION OF THE DRAWINGS]

FIG. 1 is a configuration view of a speed-shifter device according to an embodiment of the present invention.
FIG. 2 is a perspective view of a lifter device according to an embodiment of the present invention.
FIG. 3 is a view illustrating a control block of a working machine and a program update system for a working device according to a first embodiment of the present invention.
FIG. 4 is a view illustrating a first connector and a communication cable according to an embodiment of the present invention.
FIG. 5 is a view illustrating a relation between transmission of an update program (updating) and an operation of a notifier device according to an embodiment of the present invention.
FIG. 6 is an explanation view of dividing an update program into a plurality of controller devices according to an embodiment of the present invention.
FIG. 7 is a view illustrating a control block of a working machine and a program update system for a working device according to a second embodiment of the present invention.
FIG. 8 is a view illustrating an example of a map including a parking area P1 and an agricultural field H1 according to an embodiment of the present invention.
FIG. 9 is a whole view of a tractor according to an embodiment of the present invention.

### [BEST MODE FOR CARRYING OUT THE INVENTION]

Hereinafter, an embodiment of the present invention will be described with appropriate reference to the drawings.

### (First embodiment)

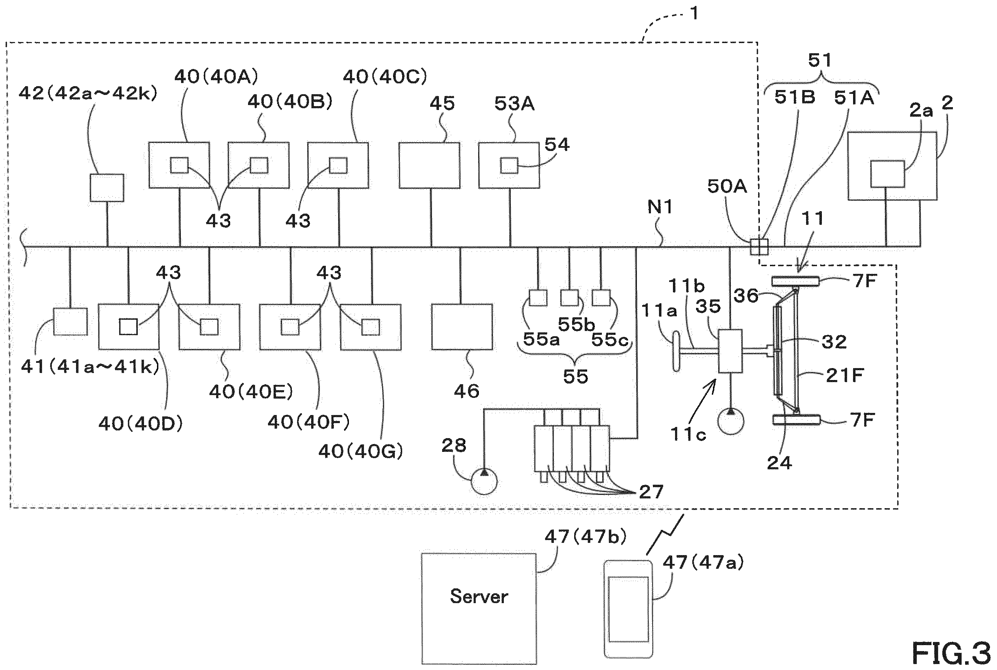

FIG. 3 shows a control block of working machine 1 and a communication system of working machine 1. The working machine 1 is an agricultural machine such as a tractor, a combine, a rice planter, and the like, and a construction machine such as a loader and a backhoe.

The working machine will be described below, taking the tractor as an example. As described above, the working machine 1 is not limited to the tractor, and therefore, the configuration common to agricultural machinery such as a combine, a rice planter, and the like, and a construction machine such as a loader and a backhoe can be replaced. That is, the description of the tractor can be read as other agricultural and construction machinery.

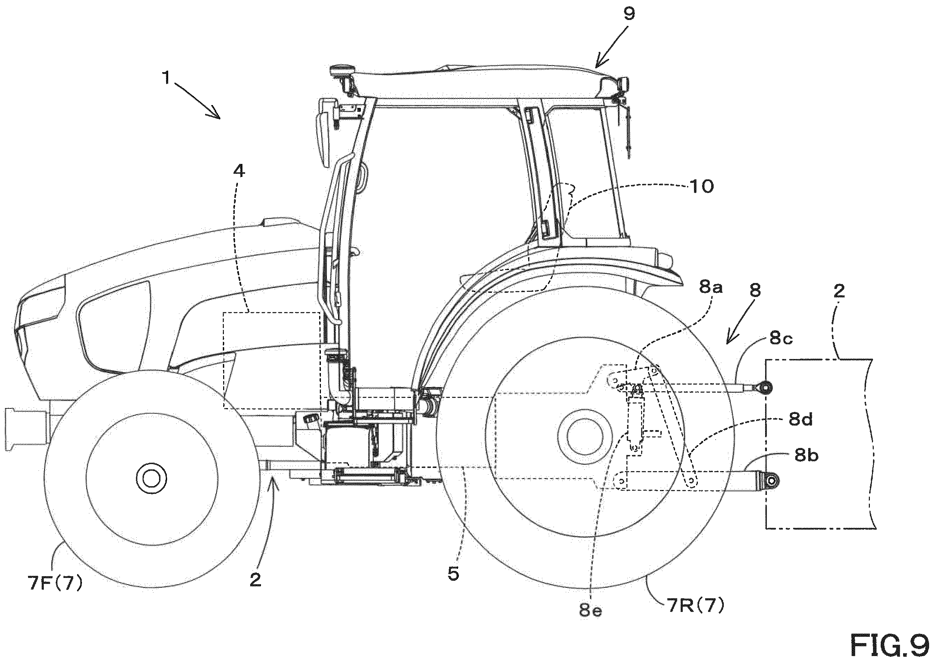

As shown in FIG. 9, the tractor is provided with a machine body 3 having a traveling device 7, a prime mover 4, and a speed-shifter device 5. The traveling device 7 is a device having a front wheel 7F and a rear wheel 7R. The front wheels 7F may be of the tire or crawler type.

The rear wheels 7R may also be of the tire or crawler type. The prime mover 4 is a gasoline engine, an internal combustion engine such as a diesel engine, an electric motor, and the like. In this embodiment, the prime mover 4 is a diesel engine.

The speed-shifter device 5 is capable of switching the propulsion of the traveling device 7 by shifting gears and of switching the traveling device 7 forward or backward. A cabin 9 is provided in the machine body 3, and an operator seat 10 is provided in the cabin 9.

A coupler portion 8 is provided at the rear portion of the machine body 3. The coupler portion 8 is detachable with the working device 2. In this embodiment, the coupler portion 8 is a lifter device that raises and lowers the attached working device 2.

The working device 2 includes a cultivating device for cultivating, a fertilizer sprayer device for spraying fertilizer, a pesticide sprayer device for spraying pesticides, a harvester device for harvesting, a mower device for harvesting pastures and the like, a tedder device for diffusing pastures and the like, a grass rake for collecting pastures and the like, a baler device for molding pastures and the like.

As shown in FIG. 3, the working device 2 is provided with a work controller device (controller device) 2a. The work controller device 2a is a device for various controls of the working device 2, and includes a CPU, electrical and electronic circuits, and the like.

The work controller device 2a has a storage device 2b for storing various information, for example, a control program, identification information, and the like. The storage device 2b includes a non-volatile memory or the like.

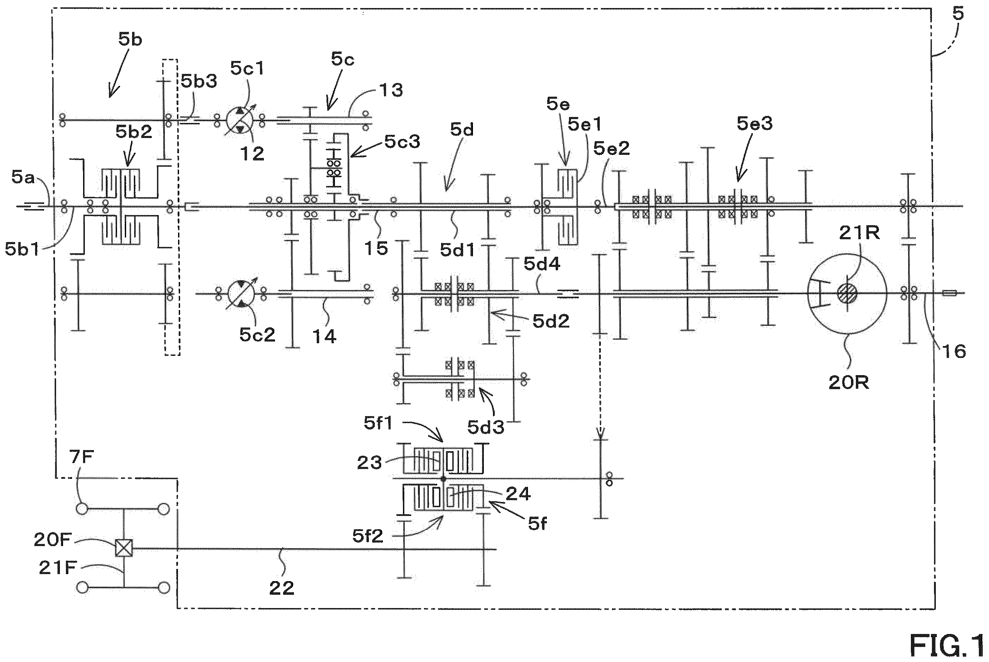

As shown in FIG. 1, the speed-shifter device 5 includes a main shaft (propulsion shaft) 5a, a shuttle portion 5b, a main speed-shifter portion 5c, a sub speed-shifter portion 5d, a PTO power speed-shifter portion 5e, and a front speed-shifter portion 5f.

The propulsion shaft 5a is rotatably supported in the housing case of the speed-shifter device 5, and power from the crankshaft of the prime mover 4 is transmitted to the propulsion shaft 5a.

The shuttle portion 5b has a shuttle shaft 5b1 and a forward/backward switching portion 5b2. The power from the propulsion shaft 5a is transmitted to the shuttle shaft 5b1. The forward/backward switching portion 5b2 includes, for example, a hydraulic clutch or the like, and switches the direction of rotation of the shuttle shaft 5b1, that is, forward and backward movement of the tractor, by turning the hydraulic clutch on and off.

The main speed-shifter portion 5c is a stepless transmission mechanism that changes the input power to stepless. The stepless transmission mechanism has a hydraulic pump 5c1, a hydraulic motor 5c2, and a planetary gear mechanism 5c3.

The hydraulic pump 5c1 is rotated by power from the output shaft 5b3 of the shuttle portion 5b. The hydraulic pump 5c1 is, for example, a variable displacement pump having a swash plate 12, and by changing the angle of the swash plate 12 (a swash plate angle), the flow rate of hydraulic fluid output from the hydraulic pump 5c1 can be changed.

The hydraulic motor 5c2 is a motor that is rotated by the hydraulic fluid output from the hydraulic pump 5c1 through a piping or other fluid circuit. The number of revolutions of the hydraulic motor 5c2 can be changed by changing the swash plate angle of the hydraulic pump 5c1 or by changing the power input to the hydraulic pump 5c1.

The planetary gear mechanism 5c3 is a mechanism including a plurality of gears (gears) and a power transmission shaft such as an input shaft and an output shaft, and includes an input shaft 13, wherein the power of the hydraulic pump 5c1 is input, an input shaft 14, wherein the power of the hydraulic motor 5c2 is input, and an output shaft 15, wherein the power is output.

The planetary gear mechanism 5c3 combines the power of the hydraulic pump 5c1 and the power of the hydraulic motor 5c2 and transmits the combined power to the output shaft 15.

Accordingly, according to the main speed-shifter portion 5c, the power output to the sub speed-shifter portion 5d can be changed by changing the swash plate angle of the swash plate 12 of the hydraulic pump 5c1, the number of revolutions of the prime mover 4, and the like, according to the main speed-shifter portion 5c. Although the main speed-shifter portion 5c includes a stepless transmission mechanism, the main speed-shifter portion 5c may be a stepless transmission mechanism in which gears are used to change the speed.

The sub speed-shifter portion 5d is a transmission mechanism having a plurality of stepped gears (gears) for changing the power, and by changing the connection (engagement) of the plurality of gears accordingly, the power input to the sub speed-shifter portion 5d from the output shaft 15 of the planetary gear mechanism 5c3 is changed and output (shifting). The sub speed-shifter portion 5d includes an input shaft 5d1, a first speed-shifter clutch 5d2, a second speed-shifter clutch 5d3, and an output shaft 5d4.

The input shaft 5d1 is a shaft to which the power of the output shaft 15 of the planetary gear mechanism 5c3 is input, and inputs the input power to the first speed-shifter clutch 5d2 and the second speed-shifter clutch 5d3 via gears and the like. By switching the connection and disconnection of the first speed-shifter clutch 5d2 and the second speed-shifter clutch 5d3, the input power is changed and output to the output shaft 5d4.

The power output to the output shaft 5d4 is transmitted to the rear wheel differential device 20R. The rear wheel differential device 20R rotatably supports the rear axle 21R on which the rear wheels 7R are mounted.

The PTO power speed-shifter device 5e has a PTO clutch 5e1, a PTO propulsion shaft 5e2, and a PTO speed-shifter device 5e3. For example, the PTO clutch 5e1 is constituted of a hydraulic clutch or the like, and is configured to switch by turning the hydraulic clutch on and off between a state where the power of the propulsion shaft 5a is transmitted to the PTO propulsion shaft 5e2 (an engaged state) and a state where the power of the propulsion shaft 5a is not transmitted to the PTO propulsion shaft 5e2 (a disengaged state).

The PTO speed-shifter portion 5e3 includes a speed-shifter clutch and a plurality of gears, and outputs the power (speed) input from the PTO propulsion shaft 5e2 to the PTO speed-shifter portion 5e3 by changing the power (speed).

The front speed-shifter portion 5f has a first front speed-shifter clutch 5f1 and a second front speed-shifter clutch 5f2. The first and second front speed-shifter clutches 5f1 and 5f2 are capable of transmitting power from the sub-speed speed-shifter portion 5d, for example, the power of the output shaft 5d4 is transmitted via the gear and the transmission shaft.

The power from the first and second front speed-shifter clutches 5f1 and 5f2 can be transmitted to the front axle 21F via the front transmission shaft 22. In particular, the front transmission shaft 22 is connected to the front wheel differential device 20F, and the front wheel differential device 20F rotatably supports the front axle 21F to which the front wheels 7F are attached.

The first front speed-shifter clutch 5f1 and the second front speed-shifter clutch 5f2 include a hydraulic clutch or the like. A fluid line is connected to the first front speed-shifter clutch 5f1, and the fluid line is connected to a control valve 23 to which hydraulic fluid output from the hydraulic pump is supplied. The first front speed-shifter clutch 5f1 is switched between an engaged state and a disengaged state according to the degree of opening of the control valve 23.

A fluid line is connected to the second front speed-shifter clutch 5f2, and the fluid line is connected to the control valve 24. The second front speed-shifter clutch 5f2 is switched between to an engaged state and a disengaged state by opening the control valve 24. The control valve 23 and the control valve 24 are, for example, a two-position switching valve with a solenoid valve, which is switched between the engaged state and the disengaged state by magnetization or demagnetization of the solenoid valve.

When the first front speed-shifter clutch 5f1 is disengaged and the second front speed-shifter clutch 5f2 is engaged, the power of the sub speed-shifter portion 5d is transmitted to the front wheels 7F through the second front speed-shifter clutch 5f2. This results in four-wheel drive (4WD) in which the front and rear wheels are driven by the power, and in which the rotation speeds of the front and rear wheels are approximately the same (4WD constant speed state).

On the other hand, when the first front speed-shifter clutch 5f1 is engaged and the second front speed-shifter clutch 5f2 is disengaged, four-wheel drive is provided and the rotation speed of the front wheels becomes higher than that of the rear wheels (4WD double speed state). When the first and second front speed-shifter clutches 5f1 and 5f2 are engaged, the power of the sub speed-shifter portion 5d is not transmitted to the front wheels 7F, and thus the rear wheels are driven by power in a two-wheel drive (2WD) system.

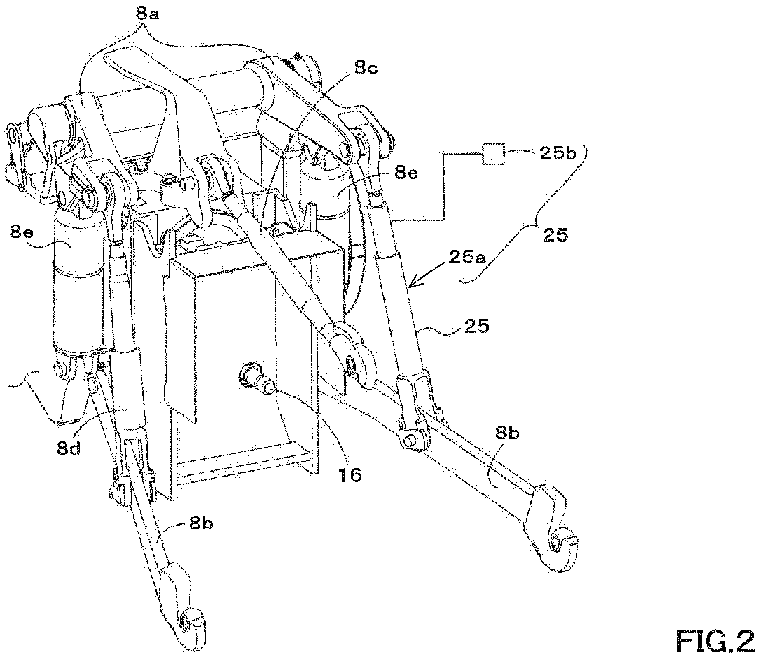

As shown in FIG. 2, the lifter device (coupler portion) 8 has a lift arm 8a, a lower link 8b, a top link 8c, a lift rod 8d, and a lift cylinder 8e. The front end portion of the lift arm 8a is pivotally supported upwardly or downwardly in the upper rear portion of the case (transmission case) housing the speed-shifter device 5. The lift arm 8a is pivoted (raised or lowered) by the actuation of the lift cylinder 8e.

The lift cylinder 8e includes a hydraulic cylinder. The lift cylinder 8e is connected to a hydraulic pump via a control valve 34. The control valve 34 is a solenoid valve or the like, which stretches and shortens the lift cylinder 8e.

The front end portion of the lower link 8b is pivotally supported upwardly or downwardly in the rear lower portion of the speed-shifter device 5. The front end portion of the top link 8c is pivotally supported upwardly or downwardly on the rear portion of the speed-shifter device 5 above the lower link 8b.

A lift rod 8d connects the lift arm 8a to the lower link 8b. A working device 2 is connected to the rear portion of the lower link 8b and the rear portion of the top link 8c. When the lift cylinder 8e is activated (telescoping), the lift arm 8a is raised and lowered, and the lower link 8b connected to the lift arm 8a via the lift rod 8d is raised and lowered.

This allows the working device 2 to pivot (raise or lower) upward or downward with the front portion of the lower link 8b as the fulcrum.

A posture changer device 25 is provided in the lifter device 8. The posture changer device 25 is a device for changing the posture of the working device 2 mounted on the machine body 3. The posture changer device 25 has a changer cylinder 25a including a hydraulic cylinder and a control valve 25b.

The changer cylinder 25a is connected to the hydraulic pump via a control valve 25b. The control valve 25b is a solenoid valve or the like to extend and retract the changer cylinder 25a. The changer cylinder 25a connects the lift arm 8a to the lower link 8b.

As shown in FIG. 3, the tractor has a plurality of hydraulic control valves 27. The plurality of hydraulic control valves 27 are hydraulic switching valves to which hydraulic fluid is supplied from the hydraulic pump 28. The plurality of hydraulic control valves 27 each have output ports, and a hydraulic hose or the like can be connected to any of the output ports.

The hydraulic hoses connected to any of the output ports of the hydraulic control valves 27 can be connected to the hydraulic attachments of the working device 2 to operate the various hydraulic attachments attached to the working device 2.

The steering device 11 has a steering wheel (steering wheel) 11a, a rotating shaft (steering axis) 11b that rotates with the rotation of the steering wheel 11a, and an assist mechanism (power steering mechanism) 11c that assists the steering of the steering wheel 11a.

The assist mechanism 11c includes a control valve 35 and a steering cylinder 32. The control valve 35 is, for example, a three-position switching valve that can be switched by movement of a spool or the like. The control valve 35 can also be switched by steering the steering shaft 11B. The steering cylinder 32 is connected to an arm (knuckle arm) 36, which changes the direction of the front wheels 7F.

Accordingly, by operating the handle 11a, the switching position and opening degree of the control valve 35 is switched according to the handle 11a, and the steering direction of the front wheels 7F can be changed by telescoping the steering cylinder 32 to the left or right according to the switching position and opening degree of the control valve 35. The steering device 11 described above is an example and is not limited to the configuration described above.

As shown in FIG. 3, the tractor is provided with a plurality of detector devices 41. The plurality of detector devices 41 are devices for detecting a condition of the tractor. The plurality of detector devices 41 include, for example, a water temperature sensor 41a for detecting the water temperature, a fuel sensor 41b for detecting the remaining amount of fuel, a prime mover revolutions sensor (rotation sensor) 41c for detecting the number of revolutions of the prime mover 4, an accelerator pedal sensor 41d for detecting the amount of operation of the accelerator pedal, a steering angle sensor 41e for detecting the steering angle of the steering device 11, an angle sensor 41f for detecting the angle of the lift arm 8a, a tilt detector sensor 41g for detecting the tilt of the machine body 3 in the width direction (right or left), a speed sensor 41h for detecting the speed of the machine body 3, a PTO rotation sensor (rotation sensor) 41i for detecting the number of rotations of the PTO axis, a battery sensor 41j for detecting the voltage of the storage batteries of the machine body, a positioning sensor (positioning device) 41k for detecting the position of the machine body 3 based on signals from positioning satellites and the like.

The positioning device 41k is capable of detecting its own position (positioning information including latitude and longitude) by a satellite positioning system (positioning satellites) such as D-GPS, GPS, GLONASS, HOKUTO, GALILEO, and MICHIBIKI.

That is, the positioning device 41k receives a satellite signal transmitted from the positioning satellite (position of the positioning satellite, transmission time, correction information, and the like) and detects the position (for example, latitude and longitude) of the tractor 1, that is, the body position, based on the satellite signal.

The positioning device 41k has a receiver device and an Inertial Measurement Unit (IMU). The receiver device is a device having an antenna or the like to receive satellite signals transmitted from a positioning satellite and is attached to the machine body 3 separately from the inertial measurement device.

In this embodiment, the receiver device is attached to the machine body 3. The attachment point of the receiver device is not limited to the embodiment.

The inertial measurement device has an acceleration sensor to detect acceleration, a gyro sensor to detect angular velocity, and the like. The machine body 3, for example, is installed below the operator seat 10, and the roll angle, pitch angle, yaw angle, and the like of the machine body 3 can be detected by the inertial measurement device.

The speed sensor 41h detects the vehicle speed by converting, for example, the number of rotations of the front axle 21F, the number of rotations of the rear axle 21R, the number of rotations of the front wheels 7F, the number of rotations of the rear wheels 7R, and the like into vehicle speed. The speed sensor 41h can also detect the directions of rotations of the front axle 21F, the rear axle 21R, the front wheels 7F and the rear wheels 7R, and can also detect whether the tractor (machine body 3) is moving forward or backward. The detector device 41 described above is an example and is not limited to the sensors described above.

The tractor is also provided with a plurality of operating members (controller devices) 42. The plurality of operation members 42 include a shuttle lever 42a for switching the forward or backward movement of the machine body 3, an ignition switch 42b for starting the prime mover 4 and the like, a PTO speed-shifter lever 42c for setting the number of revolutions of the PTO shaft, a speed-shifter change switch 42d for switching between automatic speed-shifting and manual speed-shifting, a speed-shifter lever 42e to manually switch speed-shifting steps (speed-shifting level) of the speed-shifter device 5, the accelerator 42f to accelerate or decelerate the vehicle speed, a one-touch switch 42g to raise or lower the lifter device 8, a height setting dial 42h for setting the upper limit of the lifter device 8, a vehicle speed lever 42i for setting the vehicle speed, a hydraulic operation tool 42j, a revolutions setting tool 42k for setting the upper limit of the revolutions speed of the prime mover, and the like.

The setting tools, such as the speed-shifter change switch 42d, the height setting dial 42h, and the revolutions setting tool 42k are provided in a console box on the side of the operator seat 10. The operation of the machine body 3 can be set by the operator by operating the setting tools (the speed-shifter change switch 42d, the height setting dial 42h, and the revolutions setting tool 42k). The operation members 42 described above are an example and are not limited to those described above.

As shown in FIG. 3, the tractor has a plurality of machine body controller devices 40. The machine body controller device 40 is a device that performs various controls of the tractor (machine body 3) and includes a CPU, electrical and electronic circuits, or the like.

The machine body controller device 40 has a storage device 43 that stores various information, for example, a control program, identification information, and the like. The storage device 43 includes a non-volatile memory or the like. That is, the plurality of machine body controller devices 40 are electrical components provided with the storage device 43.

The plurality of machine body controller devices 40 include a speed-shifting controller device 40A, an engine controller device 40B, a PTO controller device 40C, an lifting controller device 40D, an automatic steering controller device 40E, an posture controller device 40F, and an assist hydraulic controller device 40G.

The controller device 40 need not include all of the speed-shifting controller device 40A, the engine controller device 40B, the PTO controller device 40C, the lifting controller device 40D, the automatic steering controller device 40E, the posture controller device 40F, and the assist hydraulic controller device 40G, and may be provided according to the specifications of the tractor.

The speed-shifting controller device 40A, the engine controller device 40B, the PTO controller device 40C, the lifting controller device 40D, the automatic steering controller device 40E, the posture controller device 40F and the assist hydraulic controller device 40G may be provided in an integrated controller device.

The speed-shifting controller device 40A executes the speed shifting control. In the speed shifting control, when the automatic speed shifting function is enabled, one of the main speed-shifter portion 5c and the sub speed-shifter portion 5d are automatically switched according to the condition of the tractor, and the speed shifting step (speed shifting level) of the speed-shifter device 5 is automatically changed to a predetermined speed shifting stage (speed shifting level).

In the speed shifting control, when the speed-shifter change switch 42d is switched to the manual speed shifting, one of the main speed-shifter portion 5c and one of the sub speed-shifter portion 5d is automatically switched according to the speed shifting level (speed shifting level) set by the speed-shifter lever 42e, to change the speed shifting step of the speed-shifter device 5.

The speed shifting controller device 40A performs control (traveling switching control) of the traveling drive state (operation of the traveling device 7) of the traveling device 7. In the traveling switching control, when the shuttle lever 42a is operated in the forward direction, the forward/backward switching portion 5b2 of the shuttle portion 5b is switched to forward, thereby advancing the machine body 3.

The traveling switching control causes the machine body 3 to move backward by switching the forward/backward switching portion 5b2 of the shuttle portion 5b to backward when the shuttle lever 42a is operated to backward.

In the traveling switching control, in the case of 4WD, the first front speed-shifter clutch 5f1 is disconnected and the second front speed-shifter clutch 5f2 is connected. In the traveling switching control, in case of 4WD double speed, the first front speed-shifter clutch 5f1 shall be connected and the second front speed-shifter clutch 5f2 shall be disengaged. In the traveling switching control, in case of 2-wheel drive, the first front speed-shifter clutch 5f1 and the second front speed-shifter clutch 5f2 are engaged.

The engine controller device 40B executes the engine control. In the engine control, when the ignition switch 42b is operated to ON, the prime mover 4 is started after a predetermined process, and when the ignition switch 42b is operated to OFF, the driving of the prime mover 4 is stopped.

In the engine control, when the accelerator 42f is operated, the vehicle speed (velocity) of the machine body 3 is changed by changing the number of revolutions of the prime mover 4 (referred to as the prime mover speed) according to the amount of operation of the accelerator 42f.

The PTO controller device 40C performs the PTO control, in which the number of revolutions of the PTO shaft (referred to as the PTO speed) is changed by switching the PTO shifting gear incorporated in the speed-shifter device 5 when the PTO shifting lever 42c is operated.

The lifting controller device 40D performs the lifting and lowering control. In the lifting and lowering control, when the manual lifting and lowering function is enabled, when the one-touch switch 42g is operated in the direction of raising (the upward side), the control valve 34 is controlled to extend the lift cylinder 8e to raise the rear end portion of the lift arm 8a (the end portion of the working device 2 side).

In the lifting and lowering control, when the manual lifting and lowering function is enabled, when the one-touch switch 42g is operated in the direction of lowering (downward), the control valve 34 is controlled to contract the lift cylinder 8e to lower the rear end portion of the lift arm 8a (the end portion of the working device 2 side).

When the working device 2 is being lifted by the lifter device 8, when the position of the working device 2, that is, the angle of the lift arm 8a, reaches the upper limit (upper height limit) set by the height setting dial 42h, the lifting operation in the lifter device 8 is stopped.

In the lifting and lowering control, when the backup function is enabled, the control valve 34 is automatically controlled to extend the lift cylinder 8e and raise the rear end portion of the lift arm 8a (the end portion of the working device 2 side) by controlling the control valve 34 when the machine body 3 moves backward.

In the lifting control, when the auto-up function is enabled, when the steering angle of the steering device 11 reaches a predetermined level or higher, the control valve 34 is automatically controlled to extend the lift cylinder 8e to raise the rear end portion of the lift arm 8a (the end on the working device 2 side) by controlling the control valve 34.

The automatic steering controller device 40E performs the automatic steering control. In the automatic steering control, when the autosteer function (automatic steering function) is enabled, the steering angle of the steering device 11 is automatically controlled by controlling the control valve 35 so that the position (body position) detected by the positioning sensor 41k coincides with the predetermined scheduled line of travel.

The posture controller device 40F performs posture control. In the posture control, when it is a position function (fixed function), the length of the changer cylinder 25a is fixed to a predetermined length by outputting a control signal to the control valve 25b.

That is, the angle (the angle of a straight line connecting the lower links 8b and 8b to the horizontal) in the width direction of the working device 2 to be set by the posture changer device 25 is fixed. In the posture control, when the posture control is a leveling function, the changer cylinder 25a is stretched and shortened by outputting a control signal to the control valve 25b to maintain the working device 2 set by the posture changer device 25 in a horizontal position.

In the posture control, when the posture control is an inclination function, a control signal is output to the control valve 25b to extend and retract the changer cylinder 25a to maintain the working device 2 set by the posture changer device 25 parallel to the field (ground).

The assist hydraulic controller device 40G controls an auxiliary valve (actuation control valve) 27 to which a hydraulic hose or the like is connected out of the plurality of hydraulic control valves 27. For example, the assist hydraulic controller device 40G switches the flow of hydraulic fluid output from the predetermined hydraulic control valve 27 when the hydraulic operation tool 42j, such as a pivotable lever, is operated.

For example, when the hydraulic operation tool 42j is operated in the left direction, the assist hydraulic controller device 40G excites the solenoid of the predetermined hydraulic control valve 27 and moves the spool of the predetermined hydraulic control valve 27 to make the direction of hydraulic fluid flow in one direction.

When the hydraulic operation tool 42j is operated in the right direction, the assist hydraulic controller device 40G magnetizes the solenoid of the predetermined hydraulic control valve 27 to move the spool of the predetermined hydraulic control valve 27 to move the spool of the predetermined hydraulic control valve 27 in the other direction of the hydraulic fluid flow.

This allows the hydraulic attachment of the working device 2 to be operated by the hydraulic control valve 27.

The tractor 1 is provided with a communicator device 46. The communicator device 46 is a communication device (communication module) that performs either direct or indirect communication to the external device 47, for example, the IEEE 802.11 series Wi-Fi (Wireless Fidelity, registered trademark), BLE (Bluetooth (registered trademark) Low Energy), LPWA (Low Power, Wide Area), LPWAN (Low-Power Wide-Area Network), and the like.

The communicator device 46 may be a communication device (communication module) that performs wireless communication by means of a cellular telephone communication network or data communication network or the like.

The external device 47 is, for example, a portable device (mobile terminal) 47a, such as a tablet, smartphone, PDA, etc., and a fixed device (stationary terminal) 47b, such as a personal computer, server, or other fixed computer.

The tractor 1 is provided with a display device 45. The display device 45 is a device that displays various information about the tractor 1. The display device 45 is installed around the operator seat 10 and allows the operator to see what is displayed. The display device 45 is a meter panel device for displaying operational information, an auxiliary panel device for making settings and the like relating to various working machines, and the like.

The tractor (machine body 3) has an in-vehicle network N1. The in-vehicle network N1 is a network such as CAN (Controller Area Network), LIN (Local Interconnect Network), MOST (Media Oriented System Transport), FlexRay, ISO11783 (ISOBUS), and the like.

The in-vehicle network N1 is constituted of various electrical and other components and is connected to a plurality of machine body controller devices 40, a plurality of detector devices 41, a plurality of machine body controller devices 40, a communicator device 46, and a display device 45.

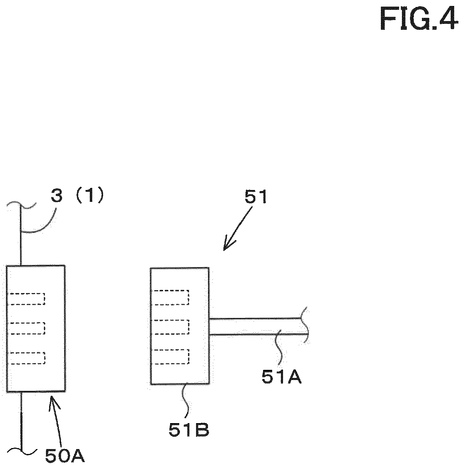

As shown in FIG. 3 and FIG. 4, the tractor (machine body 3) is provided with a first connector 50A for connecting to the in-vehicle network N1 from the outside, as shown in FIG. 3 and FIG. 4. The first connector 50A is provided at the rear portion of the machine body 3. For example, the first connector 50A is mounted at the rear of the lower portion of the cabin 9, for example, around a fender covering the upper portion of the rear wheels 7R.

A communication cable 51 is connectable to the first connector 50A, which can be connected to the working device 2. The communication cable 51 includes a cable 51A and a second connector 51B attached to the end portion of the cable 51A and capable of connecting to the first connector 50A.

By connecting a second connector 50B to the first connector 50A, a communication cable 51 can be connected to the first connector 50A. When the communication cable 51 is connected to the first connector 50A, the tractor (machine body 3) and the working device 2 can communicate with each other.

The shapes of the first connector 50A and the second connector 50B are not limited, and the first connector 50A side may have a male pin and the second connector 50B may have a female pin, the first connector 50A side may have a female pin and the second connector 50B may have a male pin, or any structure that allows the communication cable 51 to be connected to the first connector 50A via the second connector 50B.

As shown in FIG. 3, the tractor 1 is provided with an update controller device 53A. The update controller device 53A is a device that controls the updating of the update program of the working device 2, such as rewriting the update program to the working device 2. The update controller device 53A is connected to the in-vehicle network N1. The update controller device 53A has a non-volatile storage device 54.

The update program is a program necessary to operate the working device 2 and is a program stored in the storage device 2c of the working controller device 2a of the working device 2. The update program is, for example, a control program relating to the operation of the working device 2, a display program relating to the display, a communication program relating to the communication, and the like.

The type of the update program is not limited. The storage device 2c stores the identification information (type, model, model number, serial number, and the like) of the working device 2.

When the communicator device 46 of the tractor 1 receives the update program of the working device 2 sent from the external device 47 (mobile terminal 47a, stationary terminal 47b), the update controller device 53A causes the update controller device 54 to store the update program received by the communicator device 46 in the storage device 54.

When the communication cable 51 of the working device 2 is connected to the first connector 50A with the communication cable 51 of the working device 2 connected to the first connector 50A, the update controller device 53A transmits the update program stored by the storage device 54 to the in-vehicle network N1 when the reception of the update program by the communicator device 46 is completed and the storage of the update program received by the communicator device 46 is completed in the storage device 54.

Even when the communicator device 46 completes receiving the update program and storing the update program received by the communicator device 46 in the storage device 54, when the communication cable 51 of the working device 2 is not connected to the first connector 50A, the update program is not transmitted to the in-vehicle network N1.

Regarding the determination of whether or not the communication cable 51 of the working device 2 is connected to the first connector 50A, for example, when a signal of a connection is sent from the update controller device 53A to the working device 2 and the update controller device 53A receives a signal from the working device 2 responding to the signal of the connection, it is determined that the first connector 50A is connected to the the communication cable 51 of working device 2 is connected. When the update controller 53A cannot receive a signal from the working device 2 responding to the signal of the connection, it is determined that the communication cable 51 of the working device 2 is not connected to the first connector 50A.

In other words, the update controller device 53A determines whether the communication cable 51 is connected or not by making a communication connection. Whether or not the communication cable 51 is connected to the first connector 50A is not limited to the method described above.

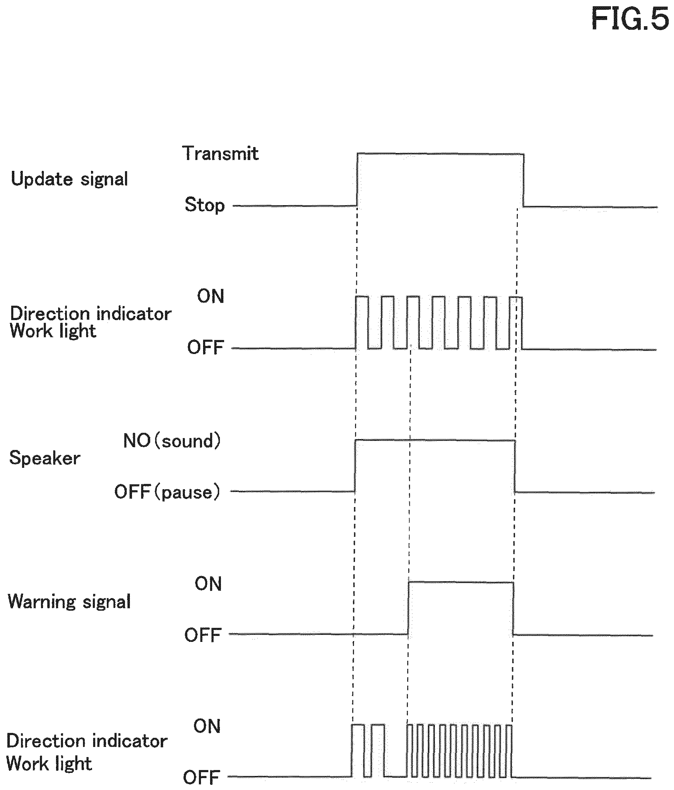

As shown in FIG. 5, when the update controller device 53A determines that the communication cable 51 is connected to the first connector 50A, the update controller device 53A transmits an update signal to the notifier device 55 indicating that an update program has been sent to the in-vehicle network N1 (notifying that the update program is being sent) by the update controller device 53A.

The notifier device 55 is, for example, a lamp that turns on or flashes a direction indicator 55a, a work light 55b, and the like, installed at the rear portion of the machine body 3.

When the direction indicator 55a receives an update signal, the direction indicator 55a reports that the update program is in the process of being updated by repeatedly blinking. Or, when the work light 55b receives an update signal, the work light 55b also repeats blinking to inform the user that the update program is in the process of being updated.

When the notifier device 55 completes the transmission of the update program to the in-vehicle network N1, it stops sending (outputting) the update signal. When stopping receiving the update signal, the direction indicator 55a stops blinking, that is, the direction indicator 55a turns off the light, thereby informing the driver that the update program has been updated. When stopping receiving the update signal, the work light 55b stops blinking (that is, turns off the light) to inform the user that the update program has been completed.

In the embodiment described above, both the direction indicator 55a and the work light 55b were flashing, but either one of the direction indicators 55a and the work light 55b may be flashing, or instead of flashing, the light may be turned on, and the method of turning on the light during transmission of the update program is not limited.

In the above-described embodiment, the update program is being transmitted by a lamp (light), but the notifier device 55 may be a sound generator device (speaker) 55c that generates sound. When the speaker 55c receives an update signal, the speaker 55c notifies that the update program is being updated by generating sound from the speaker 55c, and when the speaker 55c no longer receives the update signal, the speaker 55c notifies that the update program has been updated by stopping the generation of sound.

In the above-described embodiment, when the transmission of the update program to the in-vehicle network N1 is completed, the transmission of the update signal is stopped; however, the transmission of the update signal may be stopped when the update controller device 53A receives from the working device 2 that the rewriting of the update program is completed.

Now, when the update controller device 53A detects that the communication cable 51 has been removed from the first connector 50A (detection of removing during transmission of the update program to the in-vehicle network N1, the update controller device 53A transmits a warning signal to the notifier device 55 (direction indicator 55a, work light 55b, speaker 55c).

The notifier device 55 (direction indicator 55A, work light 55B, and speaker 55C) provides a notification different from the update signal when a warning signal is received. The update controller device 53A can be determined, for example, by referring to the terminal (port) of the first connector 50A as a removal detection, or by whether or not it can receive a connection notification from the working device 2 during transmission of the update program. The method for detection of removing is not limited to the methods described above.

As shown in FIG. 5, when the communication cable 51 is removed from the first connector 50A, the interval between the flashing of the direction indicators 55a and the work light 55b is shorter than when an update signal is received. Or, in the case where a pair of direction indicators 55a is provided, when an update signal is received, the interval between the flashing of one direction indicator 55a and the other direction indicator 55a shall be the same for the hazard flashing, while when a warning signal is received, the flashing of one direction indicator 55a and the other direction indicator 55a shall be the same for the blinking at different intervals.

Or, in the case of a pair of work lights 55b, when an update signal is received, the interval between the flashing of one work light 55b and the other work light 55b shall be the same, but when a warning signal is received, the flashing of one work light 55b and the other work light 55b shall be differently spaced. In the case of the speaker 55c, the volume (volume) of the sound when a warning signal is received shall be louder than when an update signal is received.

In the above-described embodiment, when the transmission of the update program to the in-vehicle network N1 is completed, the transmission of the update signal is stopped, but the transmission of the update signal may be stopped when the update controller device 53A receives via the communicator device 46 that the rewriting of the update program has been completed from the working device 2.

In addition to the above described embodiment, in addition to the notification by the notifier device 55 installed in the tractor 1, the mobile terminal 47a may also be used to notify the mobile terminal 47a that the update program is being updated.

For example, the update controller device 53A outputs an update signal to the communicator device 46. The communicator device 46 transmits the update signal to the mobile terminal 47a. When the mobile terminal 47a receives the update signal, the mobile terminal 47a displays on a screen, such as an LCD, that the update program is being updated.

In the above-described embodiment, the direction indicator 55a and the work light 55b are described as lamps, but the lamps are not limited and may be, for example, brake lamps that are lit when braking (braking) is performed. In this case, "direction indicator 55a" and "work light 55b" can be read as "brake lamp".

Now, in the embodiment described above, the update program was stored in the memory device 54 of the update controller device 53A, but the update controller device 53A may divide one update program and distribute one update program to a plurality of electrical components connected to the in-vehicle network N1, for example, the memory devices 43 of the plurality of controller devices 40.

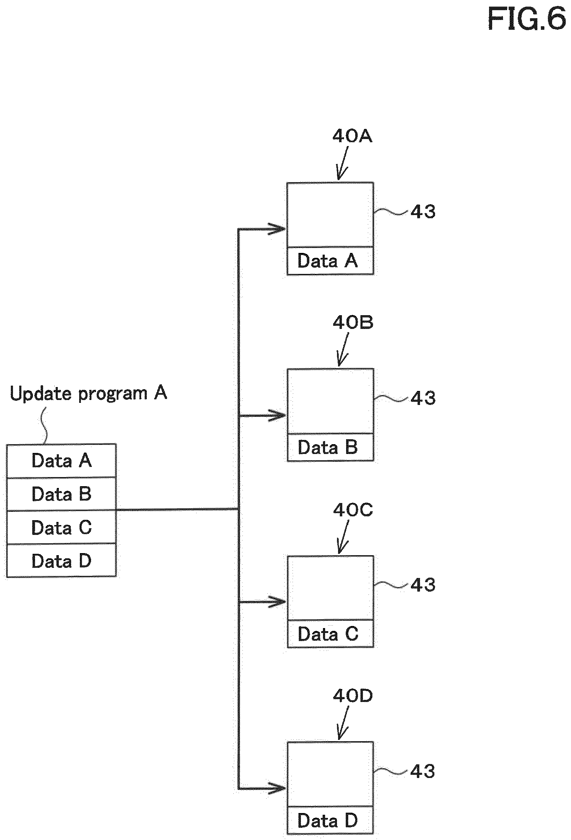

As shown in FIG. 6, when the update controller device 53A receives the update program via the communicator device 46, the update controller device 53A causes data A of the update program to be stored in the storage device 43 of the speed-shifting controller device 40A, data B to be stored in the storage device 43 of the engine controller device 40B, data C to be stored in the storage device 43 of the PTO controller device 40C, and data D to be stored in the storage device 43 of the lifting controller device 40D, for example.

When the update controller device 53A transmits the update program to the working device 2, the update controller device 53A outputs a command to transmit the update program to each of the speed-shifting controller device 40A, the engine controller device 40B, the PTO controller device 40C, and the lifting controller device 40D, and causes the respective engine controller device 40B, the PTO controller device 40C, and the lifting controller device 40D to transmit data A, data B, data C, and data D.

The update controller device 53A may receive data A, data B, data C, and data D from the engine controller device 40B, the PTO controller device 40C, and the lifting controller device 40D, and transmit data A, data B, data C, and data D to the working device 2.

Although the update controller device 53A had a plurality of controller devices 40 divide the update program and store the update program in the storage device 43, the above example is an example, and in the tractor, the destination of the data to which the update program is distributed is not limited to any electrical component as long as the electrical component has the storage device 43.

The working machines 1 includes the machine body 3 capable of connecting the working device 2, the in-vehicle network installed in the machine body 3, the machine body controller device 40 to control the machine body 3, the update controller device 53A to control the update program of the working device 2, the first connector 50A installed in the machine body 3 and connected to the in-vehicle network N1, the notifier device 55, which notifies when the update program is sent to the in-vehicle network N1 by the update controller device 53A with the communication cable 51 of the working device 2 connected to the connector 50A.

According to this configuration, when the communication cable 51 of the working device 2 is connected to the first connector 50A, when an update program is being transmitted from the working machines 1 (machine body 3) side to the working device 2, the information is provided by the notifier device 55, so that the communication cable 51 can be prevented from being removed from the first connector 50A by the operator (operator) or others during the transmission of the update program.

That is, the operator (driver) can easily update the update program to the working machines connected to the machine body, as the notifier device 55 allows the operator (driver) to understand that the update program has been transmitted.

The working machine 1 is provided with the communicator device 46 capable of receiving the update program from the outside, and the storage device 54 storing the update program of the working device 2, and the update controller 53A stores the update program received by the communicator device 46 in the storage device 54, and then transmits the update program stored in the storage device 54 to the in-vehicle network N1 after the receipt of the update program by the communicator device 46 is completed.

According to this configuration, the update program is output to the in-vehicle network N1 after the reception of the update program is securely completed in the communicator device 46, thus preventing errors in updating the update program due to the influence of the communication status.

The working machines 1 has a plurality of electrical components connected to the in-vehicle network N1, and the update controller device 53 distributes the update program to the plurality of electric components. According to this configuration, even when the capacity (data capacity) of the update program is large, the update program can be stored (retained) in the plural electrical components.

The notifier device 55 is a lamp installed in the machine body, and the lamp informs the operator (worker) that the update program is in the process of being updated. According to this configuration, the operator (worker) and others can reliably understand that the update program is being updated by the lighting or blinking of the lamp.

The notifier device 55 is a speaker installed in the machine body 3, and reports that the update program is being updated by the sound output from the speaker. According to this configuration, the operator (worker) or others can reliably understand that the update program is being updated by the sound from the speaker.

The notifier device 55 provides a different notification from the update when the communication cable 51 has been removed from the first connector 50A. According to this configuration, the operator (worker) can be informed that the communication cable 51 has been removed before the update of the update program has been completed.

The update controller device 53A provides notification to the mobile terminal 47a. According to this configuration, the mobile terminal 47a, which is possessed by the operator (worker), is also informed, so that it can be more prevented from accidentally removing the communication cable 51 while updating the update program.

### (Second embodiment)

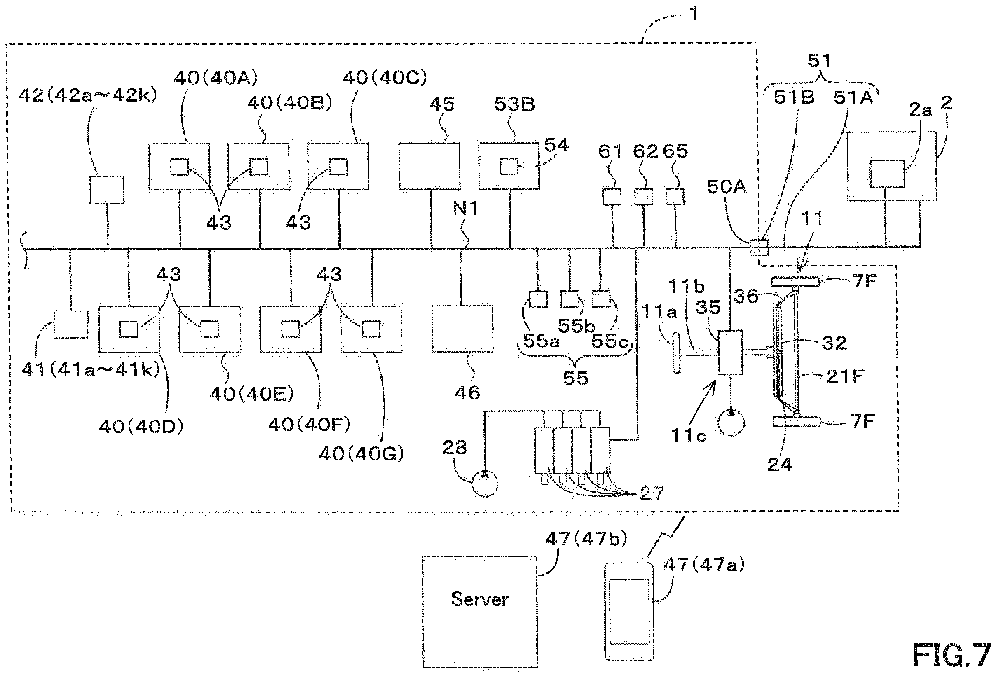

FIG. 7 shows the control block of the working machines and the program update system of the working machines according to a second embodiment of the present invention. The drawing shows the control block of the working machines and the program update system of the working machines according to the second embodiment. The same configuration as those in the first embodiment is omitted from the description with the same reference numerals.

As shown in FIG. 7, the tractor 1 is provided with an update controller device 53B. The update controller device 53B, like the update controller device 53A, controls the updating of the update program of the working device 2, such as rewriting the update program to the working device 2. The update controller device 53B is connected to the in-vehicle network N1. The update controller device 53B has a non-volatile storage device 54.

The storage device 54 stores the update program sent by the external device 47 (mobile terminal 47A, stationary terminal 47B). The update controller device 53B executes the update program to the working device 2 according to the condition of the machine body 3 or the working device 2.

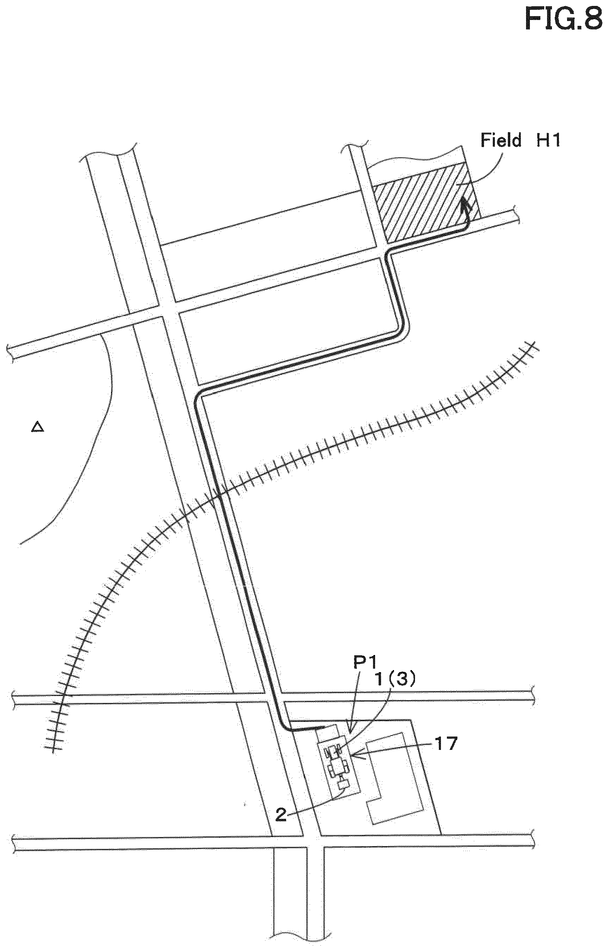

FIG. 8 shows an example of a map that includes the parking area P1 and agricultural field H1.

As shown in FIG. 8, the parking area P1 is a place to store the tractor 1, working device 2, and the like, and in the case of agricultural machine, it is a farmer or the like, and in the case of construction machine, it is a construction company or a rental company that rents construction machine.

The update controller device 53B executes the update of the update program when the tractor 1 with the working device 2 connected to the parking area P1 is stopped and the communication cable 51 of the working device 2 is connected to the first connector 50A when the update program is stored in the storage device 54.

In particular, the update controller device 53B refers to the body position detected by the positioning device 41k when the communication cable 51 is connected to the first connector 50A.

The update controller device 53B refers to the map data stored in the storage device 54 in advance. Alternatively, the update controller device 53B connects to the server of the map provider providing the map via the communicator device 46 to obtain the map data and determine whether the current body location is the parking area P1.

The area information of the parking area P1 (latitude and longitude range indicating the parking area P1) is selected from the map data by operation of the mobile terminal 47a and stored in the storage device 54.

The update controller 53B determines that the tractor 1 (machine body 3) is the parking area P1 when the current body position is within the latitude and longitude indicated in the area information of the parking area P1.

On the other hand, the update controller 53B determines that the tractor 1 (machine body 3) is not the parking area P1 when the current body position is outside the range of latitude and longitude indicated in the area information of the parking area P1.

When the tractor 1 (machine body 3) is the parking area P1, the update controller device 53B executes the update program by sending the update program stored in the storage device 54 to the working device 2 via the in-vehicle network N1.

Alternatively, the update controller device 53B may determine whether the tractor 1 (machine body 3) to which the working device 2 is connected is in transportation or not based on the body position, and when the tractor 1 is in transportation, the update program update may be executed.

As shown in FIG. 8, when carrying out agricultural work in the agricultural field H1, the tractor (machine body 3) and the working device 2 are loaded into a transport vehicle 17, such as a truck, with the tractor (machine body 3) and the working device 2 connected to the tractor (machine body 3) and the working device 2 at the parking area P1. After loading the working device 2, the transporter vehicle 17 is driven by a driver (operator) and transported to the agricultural field H1.

When the tractor and working device 2 are transported, the driving portions of the tractor (prime mover 4, PTO shaft 16, speed-shifter device 5) and other portions of the tractor are stopped. The update controller device 53B obtains from the speed-shifting controller device 40A, the engine controller device 40B, the PTO controller device 40C, and the like, that the driving portions of the tractor (the prime mover 4, the PTO shaft 16, the speed-shifter device 5) have stopped, while referring to the body position detected by the positioning device 41k.

When the driving portion of the tractor is stopped and the body position is moving, the update controller device 53B determines that the machine body 3 (working device 2) is in transportation, and transmits the update program stored in the storage device 54 to the working device 2 via the in-vehicle network N1 to execute the update program.

On the other hand, when the driving portion of the tractor has not stopped and the body position is moving, the update controller device 53B determines that the machine body 3 (working device 2) is not in transportation and does not execute the update program.

In the above embodiment, the update program was performed when the tractor 1 (machine body 3) is stopped at the parking area P1 and the tractor 1 (machine body 3) and the working device 2 are in transportation, but the update controller device 53B may perform the update program update when the power transmission portion (speed-shifter device 5) is not transmitting power to the working device 2.

In particular, as shown in FIG. 7, the tractor 1 is provided with a PTO switch 61 that switches the PTO clutch 5e1 to an engaged and disengaged state. The PTO switch 61 is, for example, a switch that can be switched ON/OFF, and when the PTO switch 61 is ON, the PTO controller device 40C outputs a control signal to the PTO control valve 62, which is engaged to the PTO clutch 5e1 by a fluid line, to bring the PTO clutch 5e1 into the engaged state.

When the PTO switch 61 is off, the PTO controller device 40C outputs a control signal to the PTO control valve 62, which is engaged to the PTO clutch 5e1 by an fluid line, to put the PTO clutch 5e1 in the disengaged state. When the PTO clutch 5e1 of the power transmission portion (speed-shifter device 5) is in the disengaged state, the update controller device 53B determines that the power is not being transmitted to the working device 2, and transmits the update program stored in the storage device 54 to the working device 2 via the in-vehicle network N1.

The update controller device 53B prohibits the PTO control by the PTO controller 40C while the update program is being transmitted (while the update program is being updated). That is, while the update controller device 53B is transmitting the update program to the working device 2 (updating the update program), the PTO controller device 40C does not output a control signal to the PTO control valve 62 to put the PTO clutch 5e1 in the connected state, even when the PTO switch 61 is turned ON, and maintains the PTO clutch 5e1 in the disengaged state.

After the update controller device 53B transmits the update program to the working device 2, when the update controller device 53B receives a notification from the working device 2 that the update of the update program is complete, the update controller device 53B releases the prohibition of the PTO control.

In the above-described embodiment, the PTO control is described as an example, but it is not limited to this.

The update controller device 53B outputs a command to set the PTO clutch 5e1 of the power transmission portion (speed-shifter device 5) to the PTO controller device 40C to disengage the PTO clutch 5e1 (stop command) when the PTO clutch 5e1 of the power transmission portion (speed-shifter device 5) is in a engaged state before the transmission of the update program (update of the update program) is performed.

When the PTO controller device 40C receives a stop command from the update controller device 53B, the PTO controller 40C outputs a control signal to the PTO control valve 62 that sets the PTO clutch 5e1 to the disengaged state, and holds the PTO clutch 5e1 in the disengaged state. Thereafter, the update controller device 53B executes the update program by sending the update program stored in the storage device 54 to the working device 2 via the in-vehicle network N1.

That is, the update controller device 53B executes the update program update after stopping the transmission of power to the working device 2. In this case, as in the above-described embodiment, the update controller device 53B prohibits the PTO control by the PTO controller device 40C during the transmission of the update program (while the update program is being updated).

In the above-described embodiment, the PTO control is described as an example, but it is not limited to this.

The update controller device 53B prohibits the control of the power transmission portion (hydraulic control valve 27) by the auxiliary hydraulic controller device 40G when the update program is transmitted (updating the update program). That is, it is prohibited to output a control signal to operate the hydraulic control valve 27, even when the hydraulic operation tool 42J is operated. The update controller device 53B lifts the prohibition of control by the assist hydraulic controller device 40G when the update program is completed.

As a result, power is no longer transmitted to the working device 2, the update program can be executed in the same manner as the PTO controller device 40C, with no power transmitted to the working device 2.

The transmission of the update program in the update controller device 53B (during the execution of the update of the update program) indicates on the mobile terminal 27a and the display device 45 that the update program is being updated and that the working device 2 cannot be operated while the update program is being updated.

The update controller device 53B may execute the update program update when the lifting and lowering device 8 has not raised the working device 2. The update controller device 53B outputs a lowering command to lower the lifter device 8 (the working device 2) to the lifting controller device 40D before sending the update program (updating the update program).

When the lifting controller device 40D receives a command to descend, the lifting controller device 40D contracts the lift cylinder 8e by controlling the control valve 34 to lower the rear end of the lift arm 8a (the end portion of the working device 2 side). The update controller device 53B prohibits the lifting and lowering control by the lifting controller device 40D after the lowering of the lifter device 8.

That is, the lifting controller device 40D prohibits the lifting controller device 40D from outputting a control signal to raise and lower the control valve 34, even when the one-touch switch 42g and the height setting dial 42h are operated. The update controller device 53B lifts the prohibition on the elevation control when the update program is completed.

Now, the tractor is provided with a timer portion 65, which counts the time. The timer portion 65 counts the month, day, and time (hours and minutes) as the time. The update controller 53B refers to the time timed by the timer portion 65 with the working device 2 connected to the tractor. The identification information of the working device 2 is obtained from the storage device 2c of the working device 2.

The update controller 53B transmits identifying information to the server 47B via the communicator device 46, and obtains from the server 47B the agricultural operations (tilling, plowing, rowing, rice planting, harvesting, sowing, fertilizing, pest control, mowing, rowing, and transplanting) that can be performed by the working device 2. The update controller device 53B obtains the agricultural tasks that can be performed by the working device 2 and executes an update of the update program when the time counted by the timer portion 65 is a time when the agricultural tasks are not performed.

For example, when the work that can be performed by working device 2 is scraping, and the time of day that the timer portion 65 counted is in February, the update program is updated because it is the time when scraping is not performed.

The program update system of the working machines 1 is a program update system of the working machines 1 including the machine body 3, the working device 2 provided on the machine body 3 to perform work, the storage device 54 storing updates of the update program of the machine body 3 or the working device 2, and the update controller 53B controlling the update of the update program, wherein the update controller 53B executes the update of the update program to the working device 2 according to the condition of the machine body 3 or the working device 2.

This allows, for example, to avoid updating updates that affect the work in situations where the machine body 3 or the working device 2 is operating, for example.

The program update system of the working machine 1 is provided with the positioning device 41K that detects the position of the machine body 3, and the update controller 53B executes the update program update when the position detected by the positioning device 41K is the parking area of the machine body 3.

According to this configuration, it is possible to reliably update the update program when the working machine 1 is in storage, that is, when the working machine 1 is not being used for work, and the update program can be updated smoothly.

The update controller 53B determines whether or not the machine body 3 is in transportation based on its position, and when it is in transportation, the update controller 53B executes an update of the update program.

According to this configuration, the update program can be reliably updated when the working machines 1 is in transportation and the working machines 1 is not being used for work, and the update program can be updated smoothly.

The machine body 3 has a power transmission portion (speed-shifter device 5, hydraulic control valve 27) that transmits power to the working device 2, and the update controller device 53B executes the update program update when the power transmission portion (speed-shifter device 5, hydraulic control valve 27) is not transmitting power to the working device 2.

According to this configuration, it is possible to reliably update the update program in situations where the working device 2 is not operating.

The machine body 3 has a power transmission portion (speed-shifter device 5, hydraulic control valve 27) that transmits power to the working device 2, and the update controller device 53B executes updating of the update program after stopping the transmission of power to the working device 2 by the power transmission portion (speed-shifter device 5, hydraulic control valve 27).

According to this configuration, it is possible to reliably update the update program in situations where the working device 2 is not operating.

The machine body 3 has a lifter device 8 that raises and lowers the working device 2, and the update controller 53B executes an update of the update program when the lifter device 8 has not raised the working device 2.

According to this configuration, when the working device 2 is raised and lowered to perform work, the update program can be updated when the working device 2 is not raised, that is, when the working device 2 is lowered.

The program update system for the working machines 1 is provided with the timer portion 65 that counts the time, and the update controller device 53B determines whether or not it is time for the working device 2 to be out of use based on the timer portion 65 and the identification information of the working device 2, and executes an update of the update program when the working device 2 is not in use.

According to this configuration, the latest program can be stored in the working device 2 before the work is done because the updated program can be updated at a time when the working device 2 is not used, that is, before the working device 2 is used.

In the embodiment described above, when applied to other working machines 1, for example, construction machine, the working device 2 is a bucket, a hydraulic crusher, a hydraulic breaker, an angle broom, an earth auger, a pallet fork, a sweeper, a mower, a snow blower, and the like, which can be applied to update the update program of the working device 2.

In addition, when a diesel particulate filter (DPF) or the like is provided in the working machines 1, the update controller device 53B may update the update program of the working device 2 when the DPF is regenerated, since it is necessary to stop the machine body 3 (working device 2) when the DPF is regenerated.

In the above-mentioned embodiment, the communicator device 46 of the working machines 1, such as the tractor, receives (acquires) the update program transmitted in wireless from the external device 47 (mobile terminal 47a, stationary terminal 47b), but the working machines 1 may not only acquire the update program by radio, but also acquire the update program in wired.

For example, the working machine 1 has a connector interface for connecting electronic storage media such as a USB memory, SD card, and the like, a computer (personal computer, laptop), and a portable device 47a (a device having a memory), and the update program may be obtained via the connector interface.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but in claims, and is intended to include all modifications within the scope of the claims.

### [DESCRIPTION OF THE REFERENCE NUMERAL]

1 Working machine
2 Working device
3 Machine body
8 Lifter device
27a Mobile terminal
40 Machine body controller device
43 Storage device
46 Communicator device
47a Mobile terminal
50A First connector
51 Communication cable
51A Cable
53 Update controller device
53A Update controller device
53B Update controller device
54 Storage device
55 Notifier device
55c Speaker
65 Timer portion
P1 Parking area
N1 In-vehicle network

## Claims

1. A program update system for a working machine (1), the program update system comprising:
the working machine (1) including a machine body (3);
a working device (2) to be used for work, the working device (2) being provided to the machine body (3), the working device (2) being detachably coupled with the machine body (3) via a coupler portion (8),
the working machine (1) further including:
an update controller (53, 53A, 53B) having a storage device (54) to store an update program for the machine body (3) or the working device (2), to control the update program, wherein the update controller (53, 53A, 53B) executes the update program for the working device (2) based on a state of the machine body (3) or the working device (2);
a positioning device (41k) to detect a position of the machine body (3); and
an in-vehicle network (N1) having a first connector (50A),
the working device (2) including:
a work controller device (2a);
a second connector (51B) connectable with the first connector (50A); and
a communication cable (51A) connecting the work controller device (2a) to the second connector (51B),
wherein the update controller (53, 53A, 53B) executes the update program when the position detected by the positioning device (41k) is a parking area of the machine body (3), by sending the update program stored in the storage device (54) to the work controller device (2a) via the in-vehicle network (N1), the first connector (50A), the second connector (51B), and the communication cable (51A).

2. The program update system for the working machine (1) according to claim 1, wherein
the machine body (3) includes
a power transmission device to transmit power to the working device (2), and
the update controller (53, 53A, 53B) executes the update program when the power transmission device is free from transmitting power to the working device (2).

3. The program update system for the working machine (1) according to claim 1 or 2, wherein
the machine body (3) includes
a power transmission device to transmit power to the working device (2), and
the update controller (53, 53A, 53B) executes the update program after the power transmission device stops transmitting power to the working device (2).

4. The program update system for the working machine (1) according to any one of claims 1 to 3, wherein
the machine body (3) includes
a lifter device (8) to lift the working device (2), and
the update controller (53, 53A, 53B) executes the update program when the lifter device (8) is free from lifting the working device (2).

5. The program update system for the working machine (1) according to any one of claims 1 to 4, comprising
a timer (65) to count time, wherein
the update controller (53, 53A, 53B) judges whether the working device (2) is in a period free from being used based on the time counted by the timer (65) and identification information of the working device (2), and executes the update program in the period free from being used.

6. The program update system for the working machine (1) according to any one of claims 1 to 5, wherein
the in-vehicle network (N1) is a ISO11783 (ISOBUS) network.

## Patentansprüche

1. Programmaktualisierungssystem für eine Arbeitsmaschine (1), das Programmaktualisierungssystem umfassend:
die Arbeitsmaschine (1), die einen Maschinenkörper (3) einschließt;
eine für die Arbeit zu verwendende Arbeitsvorrichtung (2), wobei die Arbeitsvorrichtung (2) an dem Maschinenkörper (3) bereitgestellt ist, die Arbeitsvorrichtung (2) über einen Kopplerabschnitt (8) mit dem Maschinenkörper (3) lösbar gekoppelt ist,
wobei die Arbeitsmaschine (1) ferner einschließt:
eine Aktualisierungssteuerung (53, 53A, 53B), die eine Speichervorrichtung (54) aufweist, um ein Aktualisierungsprogramm für den Maschinenkörper (3) oder die Arbeitsvorrichtung (2) zu speichern, um das Aktualisierungsprogramm zu steuern, wobei die Aktualisierungssteuerung (53, 53A, 53B) das Aktualisierungsprogramm für die Arbeitsvorrichtung (2) basierend auf einem Zustand des Maschinenkörpers (3) oder der Arbeitsvorrichtung (2) ausführt;
eine Positionierungsvorrichtung (41k), um eine Position des Maschinenkörpers (3) zu erfassen; und
ein fahrzeuginternes Netzwerk (N1), das einen ersten Verbinder (50A) aufweist,
wobei die Arbeitsvorrichtung (2) einschließt:
eine Arbeitssteuerungsvorrichtung (2a);
einen zweiten Verbinder (51B), der mit dem ersten Verbinder (50A) verbindbar ist; und
ein Kommunikationskabel (51A), das die Arbeitssteuerungsvorrichtung (2a) mit dem zweiten Verbinder (51B) verbindet,
wobei die Aktualisierungssteuerung (53, 53A, 53B) das Aktualisierungsprogramm ausführt, wenn die durch die Positionierungsvorrichtung (41k) erfasste Position ein Parkbereich des Maschinenkörpers (3) ist, durch Senden des in der Speichervorrichtung (54) gespeicherten Aktualisierungsprogramms über das fahrzeuginterne Netzwerk (N1), den ersten Verbinder (50A), den zweiten Verbinder (51B) und das Kommunikationskabel (51A) an die Arbeitssteuerungsvorrichtung (2a).

2. Programmaktualisierungssystem für die Arbeitsmaschine (1) nach Anspruch 1, wobei
der Maschinenkörper (3) einschließt
eine Energieübertragungsvorrichtung, um Energie an die Arbeitsvorrichtung (2) zu übertragen, und
die Aktualisierungssteuerung (53, 53A, 53B) das Aktualisierungsprogramm ausführt, wenn die Energieübertragungsvorrichtung keine Energie an die Arbeitsvorrichtung (2) überträgt.

3. Programmaktualisierungssystem für die Arbeitsmaschine (1) nach Anspruch 1 oder 2, wobei
der Maschinenkörper (3) einschließt
eine Energieübertragungsvorrichtung, um Energie an die Arbeitsvorrichtung (2) zu übertragen, und
die Aktualisierungssteuerung (53, 53A, 53B) das Aktualisierungsprogramm ausführt, nachdem die Energieübertragungsvorrichtung die Energieübertragung an die Arbeitsvorrichtung (2) beendet hat.

4. Programmaktualisierungssystem für die Arbeitsmaschine (1) nach einem der Ansprüche 1 bis 3, wobei
der Maschinenkörper (3) einschließt
eine Hebervorrichtung (8), um die Arbeitsvorrichtung (2) anzuheben, und
die Aktualisierungssteuerung (53, 53A, 53B) das Aktualisierungsprogramm ausführt, wenn die Hebervorrichtung (8) die Arbeitsvorrichtung (2) nicht anhebt.

5. Programmaktualisierungssystem für die Arbeitsmaschine (1) nach einem der Ansprüche 1 bis 4, umfassend
einen Zeitgeber (65), um Zeit zu zählen, wobei
die Aktualisierungssteuerung (53, 53A, 53B) beurteilt, ob sich die Arbeitsvorrichtung (2) in einer verwendungsfreien Zeit befindet, basierend auf der durch den Zeitgeber (65) gezählten Zeit und Identifikationsinformationen der Arbeitsvorrichtung (2), und das Aktualisierungsprogramm in der verwendungsfreien Zeit ausführt.

6. Programmaktualisierungssystem für die Arbeitsmaschine (1) nach einem der Ansprüche 1 bis 5, wobei
das fahrzeuginterne Netzwerk (N1) ein ISO11783-Netzwerk (ISOBUS-Netzwerk) ist.

## Revendications

1. Système de mise à jour de programme pour une machine de travail (1), le système de mise à jour de programme comprenant :
la machine de travail (1) comportant un corps de machine (3) ;
un dispositif de travail (2) à utiliser pour le travail, le dispositif de travail (2) étant fourni au corps de machine (3), le dispositif de travail (2) étant accouplé de manière amovible au corps de machine (3) par l'intermédiaire d'une partie d'accouplement (8),
la machine de travail (1) comportant en outre :
un contrôleur de mise à jour (53, 53A, 53B) ayant un dispositif de stockage (54) pour stocker un programme de mise à jour pour le corps de machine (3) ou le dispositif de travail (2), pour commander le programme de mise à jour, dans lequel le contrôleur de mise à jour (53, 53A, 53B) exécute le programme de mise à jour pour le dispositif de travail (2) sur la base d'un état du corps de machine (3) ou du dispositif de travail (2) ;
un dispositif de positionnement (41k) pour détecter une position du corps de machine (3) ; et
un réseau embarqué (N1) ayant un premier connecteur (50A),
le dispositif de travail (2) comportant :
un dispositif de contrôleur de travail (2a) ;
un second connecteur (51B) pouvant être connecté au premier connecteur (50A) ; et
un câble de communication (51A) connectant le dispositif de contrôleur de travail (2a) au second connecteur (51B),
dans lequel le contrôleur de mise à jour (53, 53A, 53B) exécute le programme de mise à jour lorsque la position détectée par le dispositif de positionnement (41k) est une zone de stationnement du corps de machine (3), en envoyant le programme de mise à jour stocké dans le dispositif de stockage (54) au dispositif de contrôleur de travail (2a) par l'intermédiaire du réseau embarqué (N1), du premier connecteur (50A), du second connecteur (51B) et du câble de communication (51A).

2. Système de mise à jour de programme pour la machine de travail (1) selon la revendication 1, dans lequel
le corps de machine (3) comporte
un dispositif de transmission d'énergie pour transmettre de l'énergie au dispositif de travail (2), et
le contrôleur de mise à jour (53, 53A, 53B) exécute le programme de mise à jour lorsque le dispositif de transmission d'énergie ne transmet plus d'énergie au dispositif de travail (2).

3. Système de mise à jour de programme pour la machine de travail (1) selon la revendication 1 ou 2, dans lequel
le corps de machine (3) comporte
un dispositif de transmission d'énergie pour transmettre de l'énergie au dispositif de travail (2), et
le contrôleur de mise à jour (53, 53A, 53B) exécute le programme de mise à jour après que le dispositif de transmission d'énergie a cessé de transmettre de l'énergie au dispositif de travail (2).

4. Système de mise à jour de programme pour la machine de travail (1) selon l'une quelconque des revendications 1 à 3, dans lequel
le corps de machine (3) comporte
un dispositif de levage (8) pour soulever le dispositif de travail (2), et
le contrôleur de mise à jour (53, 53A, 53B) exécute le programme de mise à jour lorsque le dispositif de levage (8) ne soulève plus le dispositif de travail (2).

5. Système de mise à jour de programme pour la machine de travail (1) selon l'une quelconque des revendications 1 à 4, comprenant
une minuterie (65) pour le décompte du temps, dans lequel
le contrôleur de mise à jour (53, 53A, 53B) estime si le dispositif de travail (2) se trouve dans une période libre d'utilisation sur la base du temps décompté par la minuterie (65) et d'informations d'identification du dispositif de travail (2), et exécute le programme de mise à jour dans la période libre d'utilisation.

6. Système de mise à jour de programme pour la machine de travail (1) selon l'une quelconque des revendications 1 à 5, dans lequel
le réseau embarqué (N1) est un réseau selon la norme ISO11783 (ISOBUS).
